# EUROPEAN PATENT APPLICATION

(11) **EP 3 429 255 A1**
(43) Date of publication of application: **16.01.2019**
(21) Application number: 17181373.6
(22) Date of filing: 14.07.2017
(51) Int. Cl.: H04W 24/02

(54) **MONITORING AN ACCESS POINT AND STATIONS IN A WIRELESS NETWORK**

(71) Applicant: Nokia Solutions and Networks Oy, 02610 Espoo (FI)
(72) Inventor: Ligata, Amir, 2018 Antwerpen (BE)
(74) Representative: IP HILLS NV

(57) **Abstract**

According to an embodiment, a networking device (140) for monitoring an access point (101), AP, and associated devices (121, 122), STAs, in a wireless network, is disclosed, the device comprising a collection module (141) configured to collect operating parameters from the STAs (121, 122) and to derive therefrom a station performance array for each STA comprising performance parameters of the respective STA; and a performance analyser (142) configured to compare each station performance array with a first key performance array comprising a first set of threshold performance parameters; and a classification module (143) configured to classify a STA as affected if a predefined number of elements of its station performance array is worse than indicated by the first key performance array.

## Description

### Technical Field

The present invention generally relates to the field of classification of associated stations in a wireless network.

### Background

Wireless connectivity to an access point, AP, is an important aspect of users of mobile devices, such as smartphones and tablets, in a wireless network, e.g. a Wi-Fi network. However, given the combination of the users' mobility, the stretched layout of the network and the presence of various obstacles in the environment, an unbalanced coverage of the AP may occur. Besides the unbalanced or poor coverage at various spots in the environment of the AP, users may also suffer from interference originating from other devices operating at a same or adjacent frequency band.

Poor coverage, whether combined with interference or not, results in a deteriorated quality of experience, QoE, for the users. This is reflected into intermitted connectivity and/or limited achievable throughputs.

In order to overcome this problem, a user may switch to another less polluted frequency band. Another solution is to relocate the AP or even to deploy an additional AP.

However, the decision to either switch to another frequency band, to relocate the AP and/or to deploy an additional one is solely based on the detection of poor coverage by the user. This detection on its turn is based on the calculation of a key performance indicator, KPI, on both the AP level as well as the mobile device, i.e. the associated device, STA. The KPI is quantified in terms of received signal strength indicators, RSSI, levels between the STAs connected to the AP. Additionally, an average, maximum and minimum value of RSSI levels may be calculated in order to determine the coverage of the AP in a more accurate way.

### Summary

Nevertheless, even if poor coverage is detected, the user is still left with the three options in order to solve the problem. Because switching to another frequency band, i.e. band steering, asks the least effort of the three options, it is likely that this solution will be applied first. However, it may be possible that the better approach would be to either relocate the AP or to deploy a new one. On the other hand, the level of investment for relocating the AP or deploying a new one is much higher and, even then, it is uncertain that the QoE will be improved. In other words, it is a problem that the user has no proper justification of which solution to apply.

Another problem is that a STA may suffers from poor QoE on a temporary basis, for example in boundary cases. An intervention would in this case even be superfluous.

It is therefore an object of the present disclosure to solve the above problems and to provide a solution for detecting devices with poor coverage and subsequently enhance the decision-making process for possible interventions.

This object is achieved, according to a first aspect, by a networking device for monitoring an access point, AP, and associated devices, STAs, in a wireless network, the device comprising:
- a collection module configured to collect operating parameters from the STAs and to derive therefrom a station performance array for each STA comprising performance parameters of the respective STA; and
- a performance analyser configured to compare each station performance array with a first key performance array comprising a first set of threshold performance parameters; and
- a classification module configured to classify a STA as affected if a predefined number of elements of its station performance array is worse than indicated by the first key performance array.

Thus, in the wireless network STAs are connected to the AP. Firstly, the networking device monitors these STAs. This is done by collecting parameters through the collection module which collect operating parameters of each of them. Next, it derives from the collected operating parameters a station performance array. Subsequently, the performance analyser analyses each performance array of each STA by comparing them with a first key performance array. This first set of key performance array comprises thresholds which are indicative for a performance of a STA in the Wi-Fi network. The thresholds may be predefined but may further also be adapted to the environment in which the STAs operate. Finally, the classification module classifies a STA as affected if it operates worse than indicated or defined by the first set of threshold performance parameters. An affected STA is thus a STA suffering from poor QoE or coverage.

An advantage of monitoring a STA using a multitude of parameters instead of a single one, such as an RSSI level, is that the performance of the STA is monitored in a more accurate way. The collection of these parameters may, for example, be performed on an extended time length such that transient phenomena are averaged. Next, monitoring the STA using different parameters, allows to define a first key performance array comprising parameters which are considered to be primordial with reference to a performance. The threshold performance parameters are thus predefined and ordered in the array in such an order that the array is comparable with a station performance array. Finally, the advantage of classifying STAs in either affected or not affected STAs, is that the environment is mapped in an accurate way and could be used as a proper basis for the decision-making process.

According to an embodiment, the networking device is also configured to monitor the AP. In order to do so, the collection module is further configured to collect operating parameters from the AP and to derive therefrom a radio performance array comprising performance parameters of the AP. The performance analyser is further configured to compare the radio performance array with a second key performance array comprising a second set of threshold performance parameters. Finally, the classification module is configured to classify the AP as impaired if a predefined number of elements of the radio performance array is worse than indicated by the second key performance array.

In other words, a second set of threshold performance parameters is defined as well, in this case to classify an AP as impaired or not. These thresholds are thus adjusted to a performance of an AP and thus will in general be different from the first set of thresholds, both in value as in number of parameters. In a similar way as for the STAs, the performance of the AP is monitored based on a multitude of parameters and subsequently classified as impaired if its performance is worse than indicated by the second key performance array. This classification is made based on the comparison of the radio performance array with the second key performance array.

According to an embodiment, the operating parameters collected from the STAs comprise at least one of the group of a data consumption volume, an operating frequency band, an interference rate, RSSI levels, a connection time, a roaming preference and/or a mobility factor. The collected operating parameters of the AP comprise at least one of the group of a data consumption volume, an operating frequency band, a contention rate, an interference rate, a number of connected devices, a number of neighboring APs, a retransmission rate, an error rate, a channel utilization parameter and/or an activity factor.

The data consumption volume is the number of sent and received bytes in a predefined time window. A STA as well as the AP may operate in a different frequency band. The band in which a STA and/or the AP operates may be collected as well by the collection module. The interference rate is indicative for the total number sent packets with regard to erroneously sent packets in a predefined time window. RSSI levels are indicative for the strength of the signal between the STAs and the AP. The connection time represents the time duration during which a STA is connected to the AP. The roaming preference captures whether the device was connected to another AP during an analysed predefined time window. The mobility factor is indicative for a STA's movement during a predefined time window. The contention rate of the AP is indicative for a contention on a channel through which the AP operates. The number of connected devices is the number of STAs connected to the AP during a predefined time window. The number of neighboring APs is the number of APs operating at a same and/or adjacent channel as the AP. The retransmission rate of the AP is indicative for the ratio of retransmitted packets over the total number of packets. The error rate is indicative for a ratio of erroneously sent and/or received packets over the total sent and/or received packets. A channel utilization parameters is indicative for the percentage of channel busy-time of the AP as indicated by either a physical or virtual carries sense mechanism. The activity factor is indicative for the percentage of time the channel is occupied by the AP's own activity.

Since not all parameters may be available in certain STAs or the AP, possibly only unavailable during a certain moment time period, it is an advantage that a multitude of parameters is used. In this way, the STAs and/or the AP can be classified even if only a minority of parameters is available.

According to an embodiment, the AP is capable of operating simultaneously within a higher and a lower frequency band. The networking device further comprises a switching module configured to instruct a switching of the operating band of an affected STA operating at the higher frequency band to the lower frequency band when the AP is not impaired.

In other words, the device identifies the STAs that are affected, i.e. have a performance worse than indicated by the first set of thresholds, and that are operating at the higher frequency band. Next, if the AP at the lower frequency band is not impaired the STAs operating at the higher frequency band are instructed to switch to the lower frequency band.

Thus, instead of immediately deploying a new AP or relocating the current one, the device first monitors if a switching of frequency bands is the preferred intervention. In this way, the less demanding intervention is applied first.

According to an embodiment, the collection module is further configured to derive the radio performance array and/or a station performance array for both the lower and the higher frequency band.

In other words, the collection module derives a radio and/or station performance array for each frequency band. Next, the performance analyser compares the radio performance array for each frequency band with a second set of threshold performance parameters of the respective frequency band. For the STAs, a STA performance array is compared with the first set of thresholds of the respective frequency band. Finally, the classification module classifies the radio instance of the AP as impaired or not for that given frequency band. Potentially, the higher frequency band of the AP may thus be classified as impaired while the lower frequency band is not.

The lower frequency band may for example be the 2.4GHz frequency band and the higher frequency band may for example be the 5GHz frequency band.

The networking device may, according to an embodiment, comprise a notification module configured to notify when the number of affected STAs operating at the lower frequency band exceeds a predefined number.

The predefined number may be set at a maximum number of STAs that the AP may serve or set even lower. In this way, a user is notified prior to the occurrence that the AP operates at its limit or is reaching its limit. A user therefore becomes aware that a possible intervention will need to be taken in the present future.

The limit at which an AP may operate may also be determine by a maximum data volume the AP can handle during a predefined time window. Therefore, the notification module is further configured to notify when the data volume of affected STAs operating at a lower frequency band exceeds a predefined threshold.

According to embodiments, the notification comprises a recommendation to deploy a second AP or to deploy a range extender.

Depending on the predefined number as the limit of the number of affected STAs and/or the predefined threshold as the limit data volume of affected STAs, the networking device notifies in an explicit way to either deploy a new AP or a range extender.

In this way, the user is notified prior to the investment that needs to be taken to deploy either an AP or a range extender. In other words, the networking device suggest which intervention is most suitable for the STAs that are suffering from deteriorated QoE or coverage.

According to a second aspect the disclosure relates to a method monitoring an access point, AP, and associated devices, STAs, in a wireless network, the method comprising:
- collecting operating parameters from the STAs and deriving therefrom a station performance array for each STA comprising performance parameters of the respective STA; and
- comparing each station performance array with a first key performance array comprising a first set of threshold performance parameters; and
- classifying a STA as affected if a predefined number of elements of its station performance array is worse than indicated by the first key performance array.
and/or further comprising the steps of:
- collecting operating parameters from the AP and to derive therefrom a radio performance array comprising performance parameters of the AP; and
- comparing the radio performance array with a second key performance array comprising a second set of threshold performance parameters; and
- classifying the AP as impaired if a predefined number of elements of the radio performance array is worse than indicated by the second key performance array.

According to an embodiment, the method further comprises the step of:
- instructing a switching of the operating band of an affected STA operating at the higher frequency band to the lower frequency band when the AP is not impaired.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a networking device according to an embodiment of the invention and a Wi-Fi network; and
Fig. 2 illustrates signal strength values of Wi-Fi stations and coverages of an access point in different locations of a Wi-Fi network; and
Fig. 3 illustrates a suitable computing system for performing steps according to embodiments of the invention.

### Detailed Description of Embodiment(s)

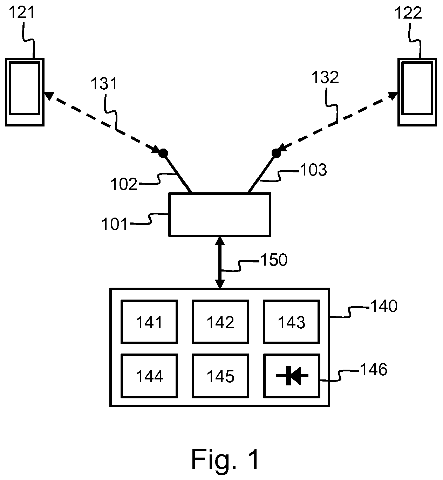

The present disclosure relates to a networking device for monitoring an access point (AP) and wireless stations or clients (STAs). Fig. 1 illustrates such a networking device 140, an AP 101 and two STAs 121 and 122. In the exemplary embodiment of Fig. 1, the AP 101 is capable of operating in two different frequency bands illustrated by a first antenna 102 and a second antenna 103. The lower frequency band is for example the 2.4GHz frequency band and the higher frequency band is for example the 5GHz frequency band. The antenna for the lower frequency band 102 may, for example, be built in the AP 101, while the antenna for the higher frequency band 103 is not. This exemplary wireless network will be used further in this disclosure to illustrate the functionality of the networking device 140. However, the frequency bands may be any other frequency band wherein an AP is capable of operating in.

The STA 121 is operating at the lower frequency band 102. The wireless connection between STA 121 and the AP 101 is illustrated by the connection 131. The STA 122 is operating at the higher frequency band 103 and the connection between STA 122 and the AP 101 is illustrated by the wireless connection 132.

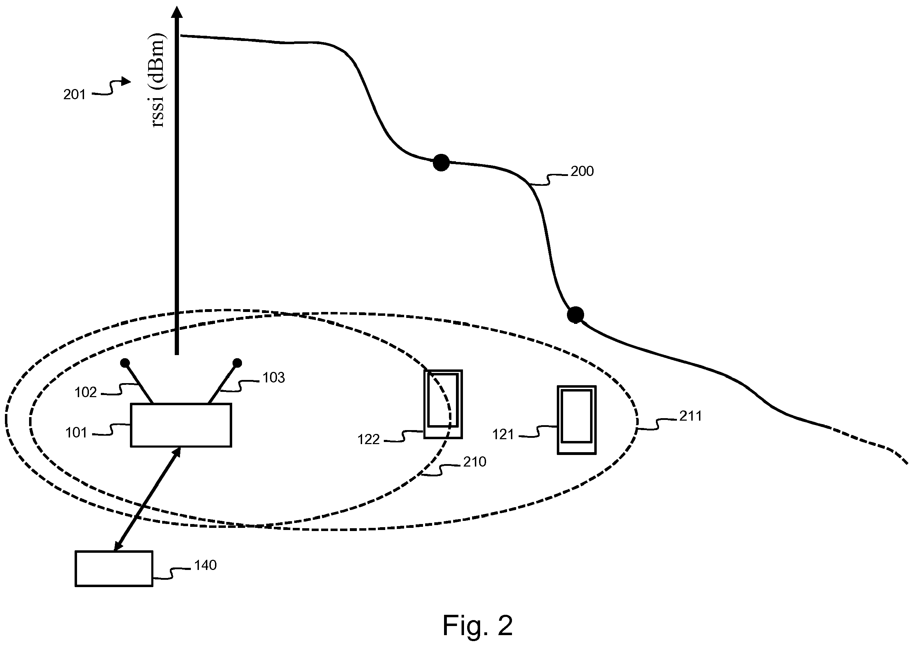

The Wi-Fi network of the AP 101 covers a particular area in the environment wherein it is active. This coverage depends a multitude of parameters, such as the presence of obstacles in the environment, the transmitting power of the AP 101 and the operating frequency band. The coverage at the lower frequency band 102 may for example be greater than the coverage at the higher frequency band 103. This difference in coverage is illustrated in Fig. 2. A connection at the higher frequency band 103 provides a substantially lower coverage area 210 compared by the coverage area 211 provided by the lower frequency band 102.

In Fig. 2 a coverage is further illustrated by signal strength values of the STAs 121 and 122 in different locations of the Wi-Fi network according to an embodiment of the invention. Signal strength values or received signal strength indicators (RSSIs) are illustrated in graph 200 and are expressed in dBm 201. When an STA moves away from the AP 101 the RSSI values decreases as illustrated by graph 200.

Due to the mobility of the STAs 121 and 122 in the environment a STA may be located at a boundary of a coverage of the AP. This is for example the case with STA 122 located at the boundary of the coverage 210. This leads to a deteriorated quality of experience (QoE) reflected into intermitted connectivity and/or a low achievable throughput. This is mainly impacted by an insufficient link strength to the AP 101. The QoE of a STA may further be impacted by interference and/or contention.

In order to be able to anticipate to this situation and determine a proper intervention, the networking device 140 monitors the AP 101 and the STAs 121 and 122. The networking device 140 may be connected to the AP 101 as illustrated by connection 150, but may, according to an embodiment, be integrated in the AP 101 itself.

First, the networking device 140 collects operating parameters of the AP 101 and/or the STAs 121 and 122 through a collection module 141. The operating parameters are either related to the AP 101, to a STA 121 or 122 or to both the AP 101 and the STAs 121 and 122.

The operating parameters are standardized by the Broadband Forum TR-181 standard and may for example be retrieved, but not limited thereto, by the following attributes:
- *Device.WiFi.Radio.{i}.Stats.BytesSent,*
- *Device.WiFi.Radio.{i}.Stats.BytesReceived,*
- *Device.WiFi.Radio.{i}.OperatingFrequencyBand,*
- *Device.WiFi.Radio.{i}CCARequest,*
- *Device.WiFi.Radio.{i}CCAReport,*
- *Device.WiFi.Radio.{i}.Stast.ErrosSent,*
- *Device.WiFi.Radio.{i}.Stats.PacketsSent,*
- *Device.WiFi.SSID.{i}.Stats.RetransCount,*
- *Device.WiFi.SSID.{i}.Stats.FailedRetransCount,*
- *Device.WiFi*.*AccesPoint*.*{i}*.*AssociatedDeviceNumberOfEntries*,
- *Device.WiFi.NeighboringWiFiDiagnostic.Result.{i},*
- *Device.WiFi.AccesPoint.{i}.AC{i}.OutQLenHistogramIntervals,*
- *Device.WiFi*.*AccesPoint*.*{i}*.*AC{i}*.*Stats*.*OutQlenHistogram*,
- *Device.WiFi.AccesPoint.{j}.AssociatedDevice.{i}.SignalStrength,*
- *Device*.*WiFi*.*AccesPoint*.*{j}*.*AssociatedDevice*.*{i}*.*AuthenticationState*,
- *Device.WiFi.AccesPoint.{i}.Enable,*
- *Device.WiFi.AccesPoint.*.AssociatedDevice.*.Stats.BytesSent,*
- *Device.WiFi.AccesPoint.*.AssociatedDevice.*.Stats.BytesReceived,*
- *Device.WiFi.AccesPoint.*.AssociatedDevice.*.Stats.ErrorsSent,*
- *Device.WiFi.AccesPoint.*.AssociatedDevice.*.Stats.RetransCount.*
The attributes may be retrieved from the AP 101 and/or STAs 121 and 122 at, for example, a fixed sampling time. This sampling time may also be adapted such that all variations are captured.

The attributes are further grouped into rates and/or constraints indicative for the performance of the AP 101 and the STAs 121 and 122. The collection module 141 derives for the STAs 121 and 122 on the one hand, and for the AP 101 on the other hand performance arrays.

For the AP 101 an array is derived and is indicative for its performance. This array may thus also be denoted as a radio health index (RHI). In other words, the array or RHI may thus be derived for each frequency band separately.

A RHI may thus be an array comprising the following attributes derived from the collected operating parameters:
- *An operating frequency band (OB);*
- *A data volume counter in a given time window (DV);*
- *A number of connected devices on the given frequency band (CD);*
- *An error ratio (ER);*
- *A retransmission ratio (RR);*
- *A contention on a current channel, i.e. the percentage of time, for example linearly scaled from 0 to 255 with 255 representing 100%, the AP sensed a medium is busy, as indicated by either the physical or virtual carrier sense mechanism (CT);*
- *An activity factor of the AP at a frequency band, i.e. how much time the AP at a frequency band transmits or receives packets (AF);*
- *A sum of a number of neighboring Wi-Fi APs operating at a same channel as the AP itself and neighboring Wi-Fi APs operating on an adjacent channel whose energy leakage is above an energy detection threshold (NNAP); and*
- *A demand on an AP's frequency band proportional to the access category queue size.*
The RHI may then be presented as an array *[OB, DV, CD, ER, RR, CT, AF, NNAP, DM].* The RHI may also, according to an embodiment, comprising only a part of these attributes.

For each STA, the collection module derives a performance array as well, in this case a station performance array. Such a station performance array may, for example, comprise the following attributes derived from the collected operating parameters:
- *A unique device identification, for example a MAC address or host name (DevID);*
- *The frequency band to which the STA is connected (ConRadio);*
- *A coverage score for the given STA, which either comprise an average value or a normalized coverage score (Cov). The value of Cov may for example be calculated as a function of the mean RSSI, variance RSSI and the total emitter power of a radio device, i.e. Cov{DevID} = (PowV* + *avg{RSSI - var{RSSI})100, wherein PowV = 100 - maxPower;*
- *An interference metric calculated as a ratio between the error packets and the total number of packets (Int);*
- *A time duration during which the device is connected to the AP at a particular frequency band (ConT);*
- *A demand of the STA expressed in a data volume (DataV);*
- *Mobility observations, which may be derived based on a standard deviation of a signal strength vector (MobStat). For example, if a standard deviation is below a predefined threshold, for example 3dB, the STA is considered as stationary or quasi-stationary. If the standard deviation is above the predefined threshold, the STA is labelled as non-stationary; and*
- *Roaming preferences, which captures whether the STA was connected to another frequency band over the analysed time window (RoamP).*
In this way, a station performance array may be represented as an array *DevOBS= [DevID, ConRadio, Cov, Int, ConT, DataV, MobStat, RoamP].* A station performance array may also, according to an embodiment, comprising only a part of these attributes. Since a number of these attributes have a higher dynamic than other attributes, preferably the time window in which these attributes are collected is adapted to the highest dynamic in order to capture all variations.

Next, a performance analyser 142 compares each of these arrays with a key performance array. For the STAs 121 and 122, a first key performance array comprises a first set of threshold performance parameters which are indicative for the performance of a STA in a given frequency band. A similar comparison is made for the AP 101, wherein the station performance arrays, which is split up in a station performance array for the higher frequency band and one for the lower one, are compared with a second key performance array of the respective frequency band comprising a second set of threshold performance parameters indicative for the performance of the AP 101 at a given frequency band.

Subsequently, a classification module 143 classifies the STAs 121 and 122 and the AP 101. The STAs 121 and 122 are classified as affected if, through the comparison with the first set, a predefined number of elements of its respective performance array is worse than indicated by the first key performance array. STA 122 may thus be classified as affected, while STA 121 is not. The classification module 143 further classifies the AP 101 as well. Since the AP 101 operates at two distinct frequency bands, a distinction of the classification of the AP based on the frequency band is made as well. If the AP 101 at a given frequency band operates worse than indicated by the second key performance array through the comparison, it is classified as impaired. In this exemplary illustration, the AP 101 operating at the higher frequency band 132 is classified as impaired, while the AP 101 operating at the lower frequency band 102 is not.

The classification for the AP 101 may, for example, be performed by comparing a number of the attributes in the RHI array *[OB, DV, CD, ER, RR, CT, AF, NNAP, DM]* with predefined thresholds. A frequency band of the AP 101 may for example be classified as impaired if:
- *(RHI.ER > 0.02) or (RHI.RR > 0.2) or (RHICT* > *0.025) or (RHI.NNAP > 5) or (RHI.AF > 0.5) or (RHI.DV > DataTh) or (RHI.CD > DevTh),* wherein *DataTh* is a predefined data volume and *DevTh* is a predefined number of maximum connected devices. Both thresholds *DataTh* and *DevTh* may be dependent on the type and capacity of the AP.
If a frequency band of the AP 101 is not classified as impaired, it is labelled as good, or *RHI. OB = 'good'.*

The classification of the STAs 121 and 122 is performed in a similar way. Attributes of the station performance array *DevOBS = [DevID, ConRadio, Cov, Int, ConT, DataV, MobStat, RoamP]* are compared with corresponding threshold performances parameters. In this way, observation - threshold pairs are obtained. These pairs are, for example, *[{RoamP,'FALSE'}, {ContT,Tlen}, {MobStat,'Stationary'}, {Cov*,'*LOW*'*}*, *{Int*,*'HIGH'}*, *{DataV,DataTh}],* wherein *Tlen* is a time length during which a STA was connected to the AP 101 through a particular frequency band.

A STA may in this way be classified as affected if *(DevOBS.RoamP* == *FALSE) and (DevOBS.Cont > Tlen) and (DevOBS.Mobstat* == '*Stationary*'*) and (DevOBS.Cob* == *'LOW') and (DevOBS.Int* == *'HIGH') and (DevOBS.DataV > DataTh).* Thus, an affected STA experiences poor QoE.

Next, a switching module 144 may instruct a switching of the operating frequency band of the STA 122 to switch from the higher frequency band to the lower frequency band. If for example, a STA operating at the higher frequency band is affected and the AP at the lower frequency band is not impaired, a switching is instructed. An affected STA may, for example, be labelled by *select(DevOBS* == *'affected')* as *DevOBS*,* so a switching is instructed when *(DevOBS* == 5) and (RHI.OB(2.4) == 'good)* in the case that the AP 101 operates at the 2.4GHz and 5GHz frequency bands.

According to an embodiment, the networking device 140 further comprises a notification module 145. This notification module, for example, notifies if it is recommended to deploy a new AP or a range extender. First, the total number of affected STAs on the lower frequency band is calculated. Next, if this total number of affected STAs exceeds a predefined number, denoted as *Ndev,* or a sum of data volume of the affected STAs exceeds a predefined value, denoted as *Dmnd,* the notification module 145 notifies to either deploy a new AP or to deploy a range extender.

The notification of deploying a new AP or either deploying a range extender may be performed by pushing a notification to a STA. The notification may, according to an embodiment, also be performed through a signalling light, for example, via a LED 146, wherein a color of the LED corresponds to either the deployment of an AP or of a range extender.

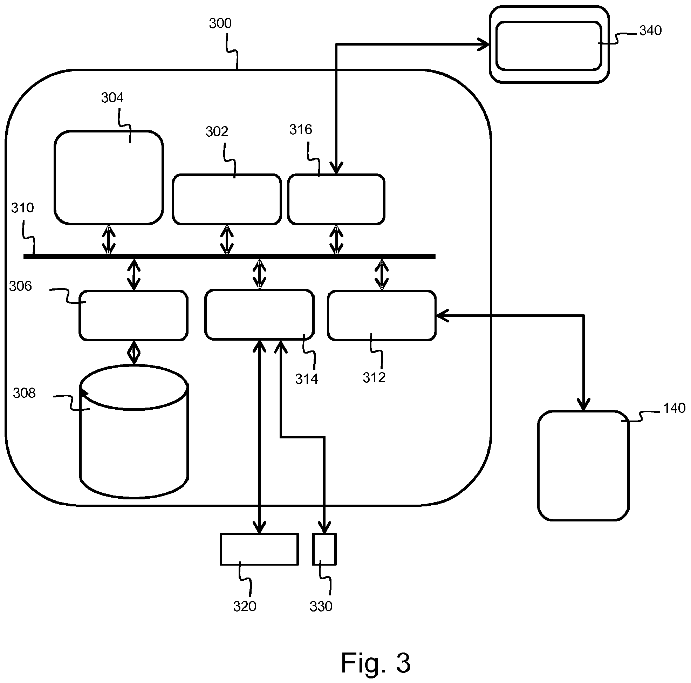

Fig. 3 shows details of the networking device 140 according to a further embodiment of the invention. Networking device 140 is suitable for performing the steps according to the above embodiments. Networking device 140 may also be incorporated in or used as access point 101. Networking device 140 may in general be formed as a suitable general purpose computer and comprise a bus 310, a processor 302, a local memory 304, one or more optional input interfaces 314, one or more optional output interfaces 316, a communication interface 312, a storage element interface 306 and one or more storage elements 308. Bus 310 may comprise one or more conductors that permit communication among the components of the networking device 140. Processor 302 may include any type of conventional processor or microprocessor that interprets and executes programming instructions. Local memory 304 may include a random access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator to input information to the networking device 140, such as a keyboard 320, a mouse 330, a pen, voice recognition and/or biometric mechanisms, etc. Output interface 316 may comprise one or more conventional mechanisms that output information to the operator, such as a display 340, etc. Communication interface 312 may comprise any transceiver-like mechanism such as for example one or more Ethernet interfaces that enables networking device 140 to communicate with other devices and/or systems, for example with access point 101. The communication interface 312 of networking device 140 may be connected to such another networking device by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage elements 308 above is described as a local disk, in general any other suitable computer-readable media such as a removable magnetic disk, optical storage media such as a CD or DVD, -ROM disk, solid state drives, flash memory cards, ... could be used. The networking device 140 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A networking device (140) for monitoring an access point (101), AP, and associated devices (121, 122), STAs, in a wireless network, the device comprising:
- a collection module (141) configured to collect operating parameters from the STAs (121, 122) and to derive therefrom a station performance array for each STA comprising performance parameters of the respective STA; and
- a performance analyser (142) configured to compare each station performance array with a first key performance array comprising a first set of threshold performance parameters; and
- a classification module (143) configured to classify a STA as affected if a predefined number of elements of its station performance array is worse than indicated by the first key performance array.

2. Networking device (140) according to claim 1, wherein:
- the collection module (141) further is configured to collect operating parameters from the AP (101) and to derive therefrom a radio performance array comprising performance parameters of the AP; and
- the performance analyser (142) further is configured to compare the radio performance array with a second key performance array comprising a second set of threshold performance parameters; and
- the classification module (143) further is configured to classify the AP (101) as impaired if a predefined number of elements of the radio performance array is worse than indicated by the second key performance array.

3. Networking device (140) according to claim 2, wherein the operating parameters comprise at least one of the group of:
- a data consumption volume of the AP (101) and/or the STAs (121, 122); and
- an operating frequency band of the AP (101) and/or the STAs (121, 122); and
- a contention rate of the AP (101); and
- an interference rate of the AP (101) and/or the STAs (121, 122); and
- a number of connected devices to the AP (101); and
- a number of neighboring APs of the AP (101); and
- received signal strength indications, RSSI of the STAs (121, 122); and
- a connection time of the STAs (121, 122); and
- a roaming preference of the STAs (121, 122); and
- a mobility factor of the STAs (121, 122);
- a retransmission rate of the AP (101); and
- an error rate of the AP (101); and
- a channel utilization parameter of the AP (101); and
- an activity factor of the AP (101).

4. Networking device (140) according to claim 2, wherein the AP (101) is capable of operating simultaneously within a higher (103) and a lower (102) frequency band, and wherein the device (140) further comprises:
- a switching module (144) configured to instruct a switching of the operating band of an affected STA operating at the higher frequency band to the lower frequency band when the AP (101) is not impaired.

5. Networking device (140) according to claim 4, wherein the collection module (141) is further configured to derive the radio performance array and/or a station performance array for both the lower and the higher frequency band.

6. Networking device (140) according to claim 4, further comprising a notification module (145) configured to notify when the number of affected STAs operating at the lower frequency band exceeds a predefined number.

7. Networking device (140) according to claim 6, wherein the notification module (145) is further configured to notify when the data volume of affected STAs operating at the lower frequency band exceeds a predefined threshold.

8. Networking device (140) according to claim 4, wherein the lower frequency band is the 2.4GHz frequency band and the higher frequency band is the 5GHz frequency band.

9. Networking device (140) according to claim 6, wherein the notification comprises a recommendation to deploy a second AP.

10. Networking device (140) according to claim 6, wherein the notification comprises a recommendation to deploy a range extender.

11. Method for monitoring an access point, AP, and associated devices, STAs, in a wireless network, the method comprising:
- collecting operating parameters from the STAs and deriving therefrom a station performance array for each STA comprising performance parameters of the respective STA; and
- comparing each station performance array with a first key performance array comprising a first set of threshold performance parameters; and
- classifying a STA as affected if a predefined number of elements of its station performance array is worse than indicated by the first key performance array.
and/or further comprising the steps of:
- collecting operating parameters from the AP and to derive therefrom a radio performance array comprising performance parameters of the AP; and
- comparing the radio performance array with a second key performance array comprising a second set of threshold performance parameters; and
- classifying the AP as impaired if a predefined number of elements of the radio performance array is worse than indicated by the second key performance array.

12. Method according to claim 11, the method further comprising the step of:
- instructing a switching of the operating band of an affected STA operating at the higher frequency band to the lower frequency band when the AP is not impaired.

13. A computer program product comprising computer-executable instructions for performing the method according to claim 10 when the program is run on a computer.

14. A computer readable storage medium comprising the computer product according to claim 11.

15. A data processing system programmed for carrying out the method according to claim 10.
